# EUROPEAN PATENT SPECIFICATION

(11) **EP 0 746 534 B1**
(45) Date of publication and mention of the grant of the patent: **14.04.1999**
(21) Application number: 95938563.4
(22) Date of filing: 08.12.1995
(51) Int. Cl.: C05F 9/04, C05F 3/00

(54) **PROCESS FOR PRODUCING A COMPOST MATERIAL OF HIGH WATER ABSORBING AND RETAINING CAPACITY OBTAINED ESPECIALLY FROM WOOD CUTTING INDUSTRY WASTES**
VERFAHREN ZUR HERSTELLUNG VON KOMPOST MIT HOHER WASSERAUFNAHMEFÄHIGKEIT UND WASSERRETENTION INSBESONDERE AUS DER HOLZVERARBEINTENDEINDUSTRIE
PROCEDE DE PRODUCTION, NOTAMMENT A PARTIR DES DECHETS DE SCIERIE, DE MATIERES DE TYPE COMPOST A CAPACITE ELEVEE D'ABSORPTION ET DE RETENTION DE L'EAU

(30) Priority: 09.12.1994 HU 9403539
(43) Date of publication of application: 11.12.1996
(73) Proprietor: Mohacsi Farostlemezgyar RT, 7701 Mohacs (HU); Terra-Vita KFT., 3301 Eger (HU); Allied Colloids Limited Magyarorszag KFT, 1116 Budapest (HU)
(72) Inventor: BALOGH, Gabor, H-7700 Mohács (HU); MOLN R, Jeno ", H-7700 Mohács (HU); PANCZA, Zoltán, H-7700 Mohács (HU); SZ NT , Dezso ", H-7700 Mohács (HU); DEMETER, Béla, H-3300 Eger (HU); FEKETE, Zsolt, H-3300 Eger (HU); POPOVICS, József, H-3300 Eger (HU); SARTOWSKI, Zbigniew, H-1115 Budapest (HU); ARVAI, Gyula, H-7625 Pécs (HU); KOVACS, Zoltán, H-7700 Mohács (HU)
(74) Representative: Sandmair, Kurt, Dr. Dr.
(86) International application number: HU9500062
(87) International publication number: WO9617809

(56) References cited:
- EP-A- 0 168 556
- EP-A- 0 356 816
- WO-A-91/03441
- WO-A-92/19095
- DE-A- 4 224 368
- GB-A- 2 246 566

## Description

### Technical Field of the Invention

The invention relates to a process of production of compost material of high water absorbing and retaining capacity especially by using soil fertility increasing compost material obtained from wood industry cutting.

### Background of the Invention

In the wood industry several waste materials are produced which are economically not utilizable. These materials, due to their large quantity, cause environment pollution, and are generally destroyed. However, there are some waste materials, including those from the wood industry, which, after some modification may be reprocessed. For example, these latter waste materials after complete decomposition can be used in supplementing agricultural soils and replacing horticultural humus. The decomposition of these waste materials needs different activators.

Secondary utilisation of the waste materials is a world-wide problem. The decomposition of the waste materials can be accomplished by certain activators and inoculators. Such an inoculator is described in patents EP 063 621 and HU 195 463.

There are several processes known in the art for the waste material processing. One process is described in EP 090 754. This process relates to composting of the green plant parts, particularly the green parts of sugar beet obtained in agricultural production. DE-OS 2 342 999 and WO 89/05784 describe a composting process of the farmyard manure. In the process of WO 94/05784 the inoculum known from HU 195 463 is used. In EP 107 355 , EP 125 440 and HU 183 850 composting processes of different waste materials are described. All these processes have the disadvantage that they are harmful for the soil and increase salt concentration hindering the soil germination. The same holds true for the processes described in the EP 259 608 and DE-OS 35 13 483.

In HU 195 464 the composting and neutralisation process of organic waste materials from food industry and canned food industry is described. The aim of the process was the neutralisation of the environmentally hazardous materials in the canned-food industrial sludge and destroying the hazardous micro-organism components, thus obtaining a compostable culture medium.

HU 207 696 describes a process for recycling wood industrial waste materials. In the process a compost which can easily be absorbed by plants is produced by the appropriate treatment and inoculation of the wood industrial waste material.

GB-A-2 246 566 discloses a growing medium comprising composted industrial cellulose wastes enriched with nitrogen and the preparation thereof. The growing medium disclosed consists of composted paper bulk/bark mix and/or composted wood residue and/or peat. Further, the document teaches to add acrylic polymers as wetting agents in an amount ranging from 0 to 30, preferably from 5 to 15%. Fermentation of the materials for preparing the composted material is let go just by native decomposition. During native decomposition degradation of the cellulosic materials requires long times, often even three to four years. The water content of the composted material obtained by native decomposition and fermentation is usually about 40 to 50%. This material is used as it is, and the wetting agent is added thereto.

WO 92/19095 discloses a water-retentive composition for growing plants comprising a bulking agent and water-retentive polymer. This composition is a dry product containing at most 15 wt.% water. The bulking material according to this document comprises peat and rice hulls. Both components are dried to a water content of between 10 and 15% to reduce weight and volume for easy shipping, storing and marketing. It is suggested to use 1 to 25 wt.% of the water-retentive polymer. Amounts from 10 to 20 wt.% being preferred. Further, the document clearly teaches that the more water is to be absorbed, the more water-retentive polymer is to be used.

Beside the conventional composts there is an increasing need for composts having high water absorbing and retaining capacity.

### Summary of the Invention

The subject of the present invention is to provide a process for producing a compost of high water absorbing and retaining capacity. Though the art already described certain materials having water retaining capacity but these materials were used alone only.

The invention is based on the recognition that the use of these adjuvants having high water absorbing and retaining capacity increases the beneficial characteristics of the composts prepared from wood-waste materials and thus these composts can be used in a wide application field.

The present invention provides a process for producing compost-containing compositions having high water absorbing and retaining capacity, by using compost material produced by fermentation particularly from wood industry waste material, which comprises dehydrating to a water content of from 30 to 35% the compost material transformed to plant absorbable fertilizer and decomposed under aerobic conditions known per se, then mixing the dehydrated compost material with an amount of from 1.5 to 3.0% by weight of a water absorbing and reining adjuvant. Preferably, the process comprises sieving of the dehydrated compost material before mixing it with the water absorbing and retaining adjuvant.

Even more preferably, the process comprises putting the dehydrated compost material in prism simultaneouly with the adding of the water absorbing and retaining adjuvant thereto, turning over the prism several times by power machine, homogenising the mixture and covering it with a black foil, the water content of the mixture being constantly controlled and maintained at 30 5o 35%, and, if desired, adjusting the water content within the above values.

In a preferred embodiment of the invention the following compost made from wood industrial waste material is used:
- 60-62% by weight wood industrial waste material
- 5-7% by weight inoculum
- 10% by weight straw mixed poultry-litter
- 3% by lime hydrate
- 20% by weight mortar-density poultry-litter,
which is prepared by putting the above components in layers to form a prism while keeping the C:N ration of the components at constant rate, preferably 20-25 to 1, then turning the prism over twice and after adjusting the water content by Cl-free water addition to max. 60% and pH value to 7-8 the prism is covered and allowed to stand, while the temperature of the mixture increases to 60-65°C due to the exothermic reactions, and fermenting the mixture at the same temperature during 4-5 weeks, decreasing the water content of the mixture after fermentation below 50% and aerating the mixture by turning over or blowing air therein, adjusting the water content to about 55% by the addition of Cl-fee water then covering the prism with increased water content and composting at 40-45°C for 8-10 weeks. The essential component of the compost formation is the inoculum. This important component of the product obtained by the process of the invention will be described more in details in connection with the preferred embodiments of the process.

According to another preferred embodiment of the process of the invention as water absorbing and water retaining polymer ALCOSORB 400® an acrylamide-sodium acrylate copolymer is used and the processing is performed by ventilation-turning over and/or warm air stream.

### Best mode of carrying out the invention

A preferred embodiment of the process of the invention is described hereinafter. During production of the well known wood-industrial waste material the following mixture is used:
- 60-62% by weight wood-industry waste material
- 5 - 7% by weight inoculum
- 10% by weight straw mixed poultry-litter
- 3% by weight lime hydrate
- 20% by weight mortar density poultry-litter.

Taking into consideration their density the components are layered in an order which assure the homogeneity of the mixture. Experiments proved that the optimal fermentation of the wood waste material is achieved by forming a prism which is max. 30 m long, 4 to 5 m wide and not higher than 1.8 to 2 m. When layering the components, the height thereof should be kept controlled. Preferably, the wood waste material layer should not be thicker thank 25 cm, while the optimal thickness of the inoculum is 1 to 23 cm. The straw mixed poultry-litter is put onto the above layers in a thickness of 5 to 8 cm covered by the lime hydrate and the layers are covered with a mortal-density poultry litter layer of 5 to 6 cm thickness. The above layering process is repeated in the above order and dimensions until the required height of the prism is obtained.

The prism thus prepared is then turned over at least two times in order to assure its homogeneity. Due to the dimensions of the prism, this process is preferably carried out with a bagger. During the first mixing process the pnsm is watered with Cl-free water - obtained preferably from a digged or bored well - until the water content thereof exceeds 60%. The homogenous water distribution in the prism is provided by the second mixing step. Subsequent to the turning over process the prism is shaped to the required size and covered with a black foil.

The C:N ratio in the above mixture is 20 to 25:1. Under such a ration, addition of the 3% by weight lime hydrate and the inoculum mixture (pH = 7) provides mixture with a pH of 7 to 8.

The preparation of the inoculum used in the process of the invention is described in Hungarian Patent No. 195 463 as cited above.

The preparation of the inoculum is accomplished as follows:
First step:
25-30 parts by weight green plant material,
15-20 parts by weight grape marc,
40-50 parts by weight reed debris or chopped straw and 10 parts by weight peat bran are mixed after crushing and the water content of the mixture is set to 70 to 80% by weight, with Cl-free water.

To the wet material 0.5 - 1% by weight inoculum, based on total amount of the mixture, prepared from the mixture green plant material, grape marc, reed debris, chopped straw or hay decomposed reed mud, ammonium nitrate and poultry litter is added, the said mixture containing the sterile mycelium of Actinomycetes strains, like Penicillium sp., Aspergillus sp., Trichoderma, Chaetonium, Sporotrichum, then the mixture is homogenised, put in prism layers and stored for 2-3 weeks.

### To a mixture of

35-40 parts by weight fallen leaf,
10-12 parts by weight peat bran
40-50 parts by weight plant debris suitably chopped straw and/or corncob a mixture of
1-2 parts by weight tobacco powder
1-2 parts by weight lime hydrate and
3-5 parts by weight ammonium nitrate
is added and the water content of the final mixture is adjusted to 60-65% by weight by the addition of Cl-free water. The wet mixture is homogenised, layered to pnsm and the prism is covered by wet peat-bran layer and then covered with preferably black foil and allowed to stand.

When the temperature of the pnsm thus prepared exceeds 50 to 55°C., at a rate of 100 to 120 l/prism m³ air is blown into the mixture or the pnsm is turned over.

On the 10th day after the prism temperature has increased the 50 to 55°C, the pH value, C:N ratio, and water content of the prism is determined and, depending on the values measured, different control processes are performed. Thus, for example, when the pH value is under 7.5, it is corrected to 7.5 to 8 by the addition of lime hydrate. When the C:N ratio is over 13 to 1, the ratio is corrected to about 10 to 1 by the addition of ammonium nitrate. When the water content is under 50% by weight, it is corrected to 50 to 55% by weight by addition of Cl-free water and the aeration is maintained until the prism colour changes to brown and the smell of ammonia faints. After finishing the aeration, the mixture is covered and fermented for additional 10 to 14 days. After preparation of the above inoculum components, they are mixed in a ratio of 1 to 1 and to the mixture 15% by weight poultry litter is added. The mixture is homogenised, then covered with black foil and stored in closed room for 8-10 days.

In the mixture produced by the use of the above inoculum with a water content of 60% having relatively loose structure the fermentation process is induced with in one week and the temperature of prism increases, reaching 60-65°C within 10 to 15 days. This temperature remains constant in 4 to 5 weeks then slowly decreases. During this period the intensive proliferation of the micro-organism content of the mixture is observed. At the termination of the fermentation process the water content of the prism decreases below 50%.

During the fermentation period an optimal culture medium for the micro-organisms is formed and thus, an explosion-like proliferation of micro-organisms might occur in the second part thereof. This explosion-like proliferation, however, is limited by the decrease of the water content and the temperature, furthermore, the oxygen content will also decrease even to zero level or the fermentation bio-gases expel the oxygen content from the mixture. In order to maintain further growth of the micro-organisms, aeration of the prism material is needed. The aeration is carried out by turning over with bagger and during this process the water content of the prism shall be raised as well. The water content is raised by the addition of Cl-free water until 55%. After finishing the aeration and water content modification the prism is again covered.

After some days, the temperature of the prism will raise again and in 8-10 days it reaches 45 to 50°C. The micro-organism content of the prism starts a fast proliferation and the cellulose - like organic components of the prism are transformed to humus absorbable by plants. The caramel formation process is ended in 8-10 weeks. The process of the invention is not finished by the caramellization step. The product of the above process - named TERRA VITA M (R) - has 40 to 50% water content.

This water content, however, is too high for the introduction of the water absorbing and retaining adjuvant as this adjuvant has to provide the water absorbing and retaining capacity for the compost only after its application into the soil. Therefore, the water content of the ready compost material - TERRA VITA M®- should be decreased to a consoled level. Accordingly, the compost produced by the above process is dehydrated to a water content of 30 to 35%. Dehydrating is accomplished by drying, turning over the prism several times or/and blowing warm air into the prism.

During the dehydration process a material of high water absorbing and retaining capacity - ALCOSORB 400®, acrylamide-sodium acrylate copolymer - is mixed with the compost The water absorbing and retaining component is mixed to the compost in an amount of 1.5 to 3% by weight. The quantity of this adjuvant in the final product depends on and varies according to the area of use of the product

The characteristics of the ALCOSORB 400® adjuvant used are the followings:

### Physical characteristics:

- Appearance :: colourless granulate with negligible smell
- Particle size :: larger than 1000 µm max. 5%.
under 500 µm: 40 to 60%
under 75 µm : max. 1%.

Water solubility: mostly water insoluble, insoluble residue> 90%, and the pH of the solution is neutral.
- Bull:: density: 0,75 - 0,85 g/cm³
- Dry Weight :: >90%

### Chemical characteristics:

- Composition:: acrylamide and sodium-acrylate copolymer
- Impurities:: water, max. 15% acrylamide monomer: max. 0.1%

ALCOSORB 400® is a cross-linked copolymer which absorbs water in a quantity of 400 times more of its weight. Use of adjuvant in any soil (soil, compost, etc.) it improves the water retaining capacity, thereof.

During water absorption, discrete gel particles are formed from ALCOSORB 400 and the plant root can grow inside or around these particles, thus being able to take up necessary water. Swelling of the gel particles during water absorbtion and contraction of the particles during the water loss enhance the formation of a good ventilating loose soil structure.

## Claims

1. Process for producing compost-containing compositions having high water absorbing and retaining capacity, by using compost material produced by fermentation particularly from wood industry waste material, which comprises dehydrating to a water content of from 30 to 35% the compost material transformed to plant absorbable fertilizer and decomposed under aerobic conditions known per se, then mixing the dehydrated compost material with an amount of from 1.5 to 3.0% by weight of a water absorbing and retaining adjuvant.

2. The process of Claim 1 further comprising sieving of the dehydrated compost material before mixing it with the water absorbing and retaining adjuvant.

3. The process of Claim 1 or 2 further comprising putting the dehydrated compost material in prism simultaneously with the adding of the water absorbing and retaining adjuvant thereto, turning over the prism several times by power machine, homogenising the mixture and covering it with a black foil, the water content of the mixture being constantly controlled and maintained at 30 to 35%, and, if desired, adjusting the water content within the above values.

4. The process of claim 1 characterised by using a compost of wood industry waste origin having the following components:
- 60-62% by weight wood industrial waste material
- 5-7% by weight inoculum
- 10% by weight mixture of straw and poultry litter
- 3% by weight lime hydrate
- 20% by weight mortar-density poultry litter
wherein the compost is produced by forming a prism from layers of the components and maintaining the C:N ratio at a constant level, preferably 20 to 25:1, the turning over the prism two times and modifying the water content of the mixture preferably by the addition of Cl-free water to not higher then 60%, and adjusting its pH to 7-8 value, then covering the mixture and allowing to stand while the temperature of the mixture, due to exhotermic chemical reactions, increases to 60 to 65°C and fermenting the mixture at this temperature during 4-5 weeks, reducing the water content of the mixture below 50% after the completion of fermentation aerating the mixture by turning over and/or blowing air in, then adjusting the water content to about 55% by the addition of Cl-free water and covering the prism of increased water content and composting at 40 to 45 °C during 8-10 weeks.

5. The process of claims 1 to 4 characterised in that as water absorbing and retaining polymer the acrylamide-sodium acrylate copolymer ALCOSORB 400 is used.

6. The process of any of claims 1-5 characterised in that adjustments are performed by ventilation, turning over and/or by blowing in warm air.

## Patentansprüche

1. Verfahren zur Herstellung komposthaltiger Zusammensetzungen mit hohem Wasserabsorptions- und -retentionsvermögen durch Verwendung von Kompostmaterial, das durch Fermentierung insbesondere von Abfällen aus der holzverarbeitenden Industrie hergestellt wird, bei dem man das zu einem von Pflanzen absorbierbaren Dünger umgewandelte und unter an sich bekannten aeroben Bedingungen zersetzte Kompostmaterial auf einen Wassergehalt von 30 bis 35 % dehydratisiert und das dehydratisierte Kompostmaterial dann mit einer Menge von 1,5 bis 3,0 Gew.-% eines wasserabsorbierenden und -zurückhaltenden Hilfsstoffs mischt.

2. Verfahren nach Anspruch 1, bei dem das dehydratisierte Kompostmaterial vor dem Vermischen mit dem wasserabsorbierenden und -zurückhaltenden Hilfsstoff außerdem gesiebt wird.

3. Verfahren nach Anspruch 1 oder 2, bei dem man das dehydratisierte Kompostmaterial außerdem gleichzeitig mit der Zugabe des wasserabsorbierenden und -zurückhaltenden Hilfsstoffs in eine Säule einbringt, diese Säule maschinell mehrmals umdreht, das Gemisch homogenisiert und mit einer schwarzen Folie abdeckt, wobei der Wassergehalt des Gemischs konstant gesteuert und bei 30 bis 35 % gehalten wird und bei Bedarf der Wassergehalt innerhalb obiger Werte eingestellt wird.

4. Verfahren nach Anspruch 1, dadurch gekennzeichnet, daß man einen aus Abfall der holzverarbeitenden Industrie stammenden Kompost mit folgenden Komponenten verwendet:
- 60 bis 62 Gew.-% Abfall aus der holzverarbeitenden Industrie,
- 5 bis 7 Gew.-% Impfgut,
- 10 Gew.-% eines Gemischs aus Stroh und Geflügelstreu,
- 3 Gew.-% gelöschter Kalk,
- 20 Gew.-% Geflügelstreu von Mörteldichte,
wobei der Kompost dadurch hergestellt wird, daß man eine Säule aus Schichten der Komponenten bildet und das Verhältnis von C zu N auf konstantem Niveau, vorzugsweise 20 bis 25 : 1, hält, die Säule zweimal umdreht und den Wassergehalt des Gemischs vorzugsweise durch Zugabe von Cl-freiem Wasser auf nicht höher als 60 % und den pH-Wert auf 7 bis 8 einstellt, das Gemisch dann abdeckt und stehenläßt, während seine Temperatur aufgrund exothermer chemischer Reaktionen auf 60 bis 65°C steigt, und das Gemisch bei dieser Temperatur 4 bis 5 Wochen fermentiert, den Wassergehalt des Gemischs nach Abschluß der Fermentierung unter 50 % senkt, das Gemisch dann durch Wenden und/oder Einblasen von Luft belüftet, anschließend den Wassergehalt durch Zugabe von Cl-freiem Wasser auf etwa 55 % einstellt, die Säule mit dem erhöhten Wassergehalt abdeckt und den Inhalt bei 40 bis 45°C 8 bis 10 Wochen kompostiert.

5. Verfahren nach Anspruch 4, dadurch gekennzeichnet, daß man als wasserabsorbierendes und -zurückhaltendes Polymer das Acrylamid-Natriumacrylat-Copolymer ALCOSORB 400 verwendet.

6. Verfahren nach Anspruch 1 bis 5, dadurch gekennzeichnet, daß die Anpassungen durch Belüften, Umdrehen und/oder Einblasen warmer Luft vorgenommen werden.

## Revendications

1. Procédé pour la production de compositions contenant un compost avec une capacité de rétention et d'absorption d'eau importante, en utilisant un matériau de compost, produit par fermentation en particulier à partir de matériau de déchets de l'industrie du bois, procédé qui comprend les opérations consistant à déshydrater jusqu'à une teneur en eau de 30 à 35% du matériau compost transformé en engrais végétal absorbable, à décomposer dans des conditions aérobies connues per se, à mélanger ensuite le matériau compost déshydraté avec une teneur de 1,5 à 3,0 % en poids d'un adjuvant de rétention d'absorption d'eau.

2. Procédé selon la revendication 1, comprenant de plus, le tamisage du matériau compost déshydraté avant son mélange avec l'adjuvant de rétention et d'absorption d'eau.

3. Procédé selon la revendication 1 ou 2, comprenant de plus, les opérations consistant à mettre le matériau de compost déshydraté sous la forme d'un prisme simultanément avec l'addition de l'adjuvant de rétention et d'absorption d'eau, à retourner le prisme plusieurs fois au moyen d'un équipement automatique, à homogénéiser le mélange et à le recouvrir d'une feuille noire, la teneur en eau du mélange étant constamment contrôlée et maintenue à 30 jusqu'à 35%, et au besoin à ajuster la teneur en eau dans les valeurs précitées.

4. Procédé selon la revendication 1, caractérisé en ce que l'on utilise un compost provenant de déchets de l'industrie du bois avec les composants suivants :
- 60-62% en poids de matériau de déchets de l'industrie du bois
- 5 à 7% en poids d'inoculum
- 10% en poids de mélange de paille et de litière de poulailler
- 3% en poids d'hydrate de chaux
- 20% en poids d'un mortier de litière de poulailler dans lequel le compost est produit en formant un prisme à partir de couches des composants, et en maintenant un rapport C:N à un niveau constant, de préférence 20 à 25:1, en retournant le prisme deux fois et en modifiant la teneur en eau du mélange de préférence par addition d'une exempte de Cl, jusqu'à une valeur ne dépassant pas 60% et en ajustant son pH à 7-8, puis en recouvrant le mélange et en laissant reposer, tandis que la température du mélange, en raison de la réaction chimique exothermique augmente jusqu'à 60 à 65%°C et en faisant fermenter le mélange à cette température pendant quatre à cinq semaines en réduisant la teneur en eau du mélange au-dessous de 50% après fermentation et en aérant le mélange en le retournant et en y insufflant de l'air puis en ajustant la teneur en eau jusqu'à environ 55% par addition d'eau exempt de Cl et en recouvrant le prisme de teneur en eau accrue et en compostant à 40 jusqu'à 45°C pendant huit, dix semaines.

5. Procédé selon les revendications 1 à 4, caractérisé en ce qu'en tant que polymère de rétention et d'absorption d'eau, on utilise un copolymère d'acrylate de sodium-acrylamide ALCOSORB 400.

6. Procédé selon l'une quelconque des revendications 1 à 5, caractérisé en ce que les ajustements sont effectués par ventilation, retournement et/ou insufflation d'air chaud.
